# EUROPÄISCHE PATENTSCHRIFT

(11) **EP 4 405 593 B1**
(45) Veröffentlichungstag und Bekanntmachung des Hinweises auf die Patenterteilung: **23.07.2025**
(21) Anmeldenummer: 22793123.5
(22) Anmeldetag: 19.09.2022
(51) Int. Cl.: F16C 19/36, F16C 19/54, F16C 33/58, F16C 35/067, F16C 35/04, F16C 35/063

(54) **ROTORLAGEREINHEIT FÜR EINE WINDENERGIEANLAGE UND VERFAHREN ZUR EINSTELLUNG DER VORSPANNUNG IN EINER ROTORLAGEREINHEIT**
ROTOR BEARING UNIT FOR A WIND TURBINE AND METHOD FOR SETTING THE PRELOAD IN A ROTOR BEARING UNIT
UNITÉ PALIER DE ROTOR POUR UNE ÉOLIENNE ET PROCÉDÉ DE RÉGLAGE DE LA PRÉCHARGE DANS UNE UNITÉ PALIER DE ROTOR

(30) Priorität: 20.09.2021 DE 102021210436; 20.09.2021 BE 202105740
(43) Veröffentlichungstag der Anmeldung: 31.07.2024
(73) Patentinhaber: thyssenkrupp rothe erde Germany GmbH, 44137 Dortmund (DE); thyssenkrupp AG, 45143 Essen (DE)
(72) Erfinder: LÜNEBURG, Bernd, 45481 Mülheim (DE)
(74) Vertreter: thyssenkrupp Intellectual Property GmbH
(86) Internationale Anmeldenummer: PCT/EP2022/075934
(87) Internationale Veröffentlichungsnummer: WO 2023/041772

(56) Entgegenhaltungen:
- EP-A2- 2 772 646
- EP-B1- 2 710 271
- DE-A1- 102012 221 255

## Beschreibung

### Stand der Technik

Die Erfindung betrifft eine Rotorlagereinheit für eine Windenergieanlage nach dem Oberbegriff des Anspruchs 1 und ein Verfahren zur Einstellung einer axialen Vorspannung in einer Rotorlagereinheit nach dem Oberbegriff des Anspruchs 13.

Rotorlagerungen von Windenergieanlagen dienen zum einen dazu, das Leistungsmoment von der drehenden Nabe zu einem in der Gondel angeordneten Generator zu übertragen. Die Übertragung des Drehmoments erfolgt dabei entweder direkt von der Nabe auf den Generator (im sogenannten Direktantrieb) oder von der Nabe auf ein zwischengeschaltetes Getriebe als Drehmomenten-Drehzahlwandler. Zum anderen müssen die Rotorlager dazu ausgebildet sein, die auftretenden Reaktionskräfte und -momente über die stehenden Komponenten der Rotorlagerung und der Windenergieanlage in das Fundament der Windenergieanlage ableiten zu können.

Abhängig von der Bauform der Windenergieanlage ist die Rotorlagerung mit einem drehenden Außenring oder mit einem drehenden Innenring ausgebildet, an den die Nabe angeschlossen ist. Die Gondel der Windenergieanlage ist mit dem jeweils anderen, stehenden Ring der Rotorlagerung verbunden. Es sind sowohl fett- als auch ölgeschmierte Lagerungen mit und ohne Wasserkühlung bekannt.

Um den Anforderungen an eine Rotorlagerung zu genügen, sind im Wesentlichen zwei Bauformen von Rotorlagerungen bekannt. Bei der sogenannten Momentenlagerung, wie sie beispielsweise aus WO 2012/136632 A1 bekannt ist, wird der Rotor über ein einziges Großwälzlager gelagert. Das Großwälzlager ist bei dieser Bauform üblicherweise entweder als mehrreihige Rollendrehverbindung oder als Doppelkegelrollenlager ausgebildet, welche aufgrund ihrer Bauart geeignet sind, sowohl die auftretenden Kräfte als auch die Momente aufzunehmen. Um eine hinreichende Biegesteifigkeit für die Aufnahme der auftretenden Momente mit einer einzigen Lagerstelle sicherzustellen, sind allerdings besonders groß dimensionierte Lagerringe, insbesondere mit hohen radialen Ringstärken erforderlich. Transport und Montage der Rotorlagerung vor Ort sind entsprechend erschwert. Die Lagerringe sind üblicherweise nur im Bereich der Laufbahnen der Wälzkörper oberflächengehärtet. Die erforderliche hohe radiale Ringstärke kann genutzt werden um einen Lochkreis einzubringen, an dem die Lagerringe jeweils unmittelbar mit einer Anschlusskonstruktion der Nabe oder der Gondel verschraubt sind.

Eine alternative Bauform für Rotorlagerungen umfasst mindestens zwei axial zueinander beabstandete Großwälzlager, deren äußere und innere Lagerringe jeweils über Verbindungskonstruktionen miteinander verbunden sind. Als Wälzlager können beispielsweise angestellte Kegelrollenlager oder Fest-Los-Lager verwendet werden. In die Rotorlagerung eingebrachte Biegemomente werden über das lastseitige Wälzlager als Angelpunkt und die angeschlossene Verbindungskonstruktion auf das lastabgewandte Wälzlager übertragen. Die Verbindungskonstruktion wirkt dabei wie ein Hebel zur Umsetzung der wirkenden Momente in radial und/oder axial auf das lastabgewandte Lager wirkende Kräfte. Dieses als sogenannte Zwei- bzw. Mehrpunktlagerung bekannte Lagerungskonzept hat den Vorteil mit vergleichsweise geringen radialen Abmaßen der verwendeten Wälzlager eine hinreichend hohe Biegesteifigkeit zu erreichen. Bei einer solchen Lagerung wird für die Lagerringe üblicherweise ein einsatzgehärteter Wälzlagerstahl und für die Verbindungskonstruktionen ein Gusseisenteil verwendet, auf bzw. in welches die Lagerringe unter Ausbildung eines Pressverbandes eingebaut werden. Der Einbau der Lagerringe erfolgt dabei aufwändig durch thermisches Aufschrumpfen auf bzw. in die zugeordnete Verbindungskonstruktion. Ein Ausbau der Lagerringe ist nur mit erheblichem Aufwand möglich und erfordert beispielsweise den Einsatz von Drucköl. Dennoch birgt der Ausbau der Lagerringe die Gefahr, die Lagersitze zu schädigen und damit die gesamte Rotorlagereinheit zu zerstören. Insgesamt ist die Kraftübertragung bei aufgeschrumpften Wälzlagerringen in die üblicherweise als Gussbauteil ausgebildete Verbindungskonstruktion verschleiß-, setz- und rissgefährdet.

Um eine aufwändige Montage der Lagerringe durch Aufschrumpfen vor Ort zu vermeiden, ist es beispielsweise aus EP 2 710 271 B1 bekannt, das Zweipunkt-Lagerungskonzept in einer einbaufertigen Rotorlagereinheit umzusetzen, welche an den dort als Statoreinheit bzw. Rotoreinheit bezeichneten Verbindungskonstruktionen der Wälzlager jeweils einen Flansch zur Verbindung mit dem Maschinenträger bzw. der Nabe der Windenergieanlage aufweisen. Nachteilig bei dieser Bauart sind regelmäßig auftretende Probleme, die sich durch das sogenannte Ringwandern und durch eine Veränderung der axialen Vorspannung der Rotorlagereinheit ergeben.

Das Ringwandern ist ein Phänomen, welches bei im Pressverband montierten Ringen bei hohen betrieblichen Kräften und Momenten und verstärkt bei großen Lagerdurchmessern auftritt. Die betrieblichen Kräfte bewirken eine lokale Schwächung des Pressverbandes durch Aufwellung des Lagerrings und verschieben den Lagerring lokal gegenüber der zugeordneten Verbindungskonstruktion. Durch das Ringwandern wird Abrieb und Korrosion in der Passfuge begünstigt, wodurch sich das Problem mit der Zeit selbst verstärkt. Dies kann schließlich zum Lagerschaden oder zum Ausfall der gesamten Rotorlagereinheit führen. Eine bekannte Maßnahme zur Reduzierung des Ringwanderns ist es, den Querschnitt der Lagerringe zu vergrößern, um so eine größere Anpresskraft in der Passfuge erzeugen zu können. Aufgrund des meist durch den Windenergieanlagenhersteller vorgegebenen maximal zur Verfügung stehenden, radialen Bauraums, kann der radiale Ringquerschnitt jedoch nur auf Kosten des Durchmessers und/oder der Länge der als Wälzkörper verwendeten Rollen vergrößert werden, was zu einer geringeren Lebensdauer der Rotorlagereinheit u.a. aufgrund erhöhter Überrollzahlen führt.

Die axiale Vorspannung ist bei der bekannten Rotorlagereinheit eine wichtige und hinreichend genau einzustellende Größe. Bei einer zu geringen axialen Vorspannung bzw. bei einem eintretenden Axialspiel verliert die Rotorlagereinheit an Biegesteifigkeit, welches bei unterschiedlichen Windlasten zu Stößen, Axialschub und auch Verkippungen führen kann, wodurch nachfolgende Komponenten, wie Getriebe oder Generator, höher belastet und deren Lebensdauer und Effizienz negativ beeinflusst werden. Eine zu hohe Vorspannung wirkt sich nachteilig auf die Belastung der Lagerbauteile und der Verbindungskonstruktionen aus und führt zudem zu einer erhöhten Lagerreibung.

Bei der aus EP 2 710 271 B1 bekannten Lösung wird die axiale Vorspannung durch einen mit der Statoreinheit verschraubten Lagerspannring auf den auf der Statoreinheit montierten Lagerring eingebracht. Diese Einstellung der Vorspannung ist zum einen ungenau und fehleranfällig, weil die lokal erzeugte axiale Vorspannung von den jeweils vorliegenden im Presssitz des Lagerrings mit der Statoreinheit vorliegenden radialen Anpresskräften abhängt. Ferner ist sie anfällig für Änderungen durch Setzerscheinungen im Betrieb Setzerscheinungen in der Verpressung des Lagerspannrings können zu einer Verringerung der axialen Vorspannung führen. Nachteilig an dem bekannten Verfahren zum Einbringen einer axialen Vorspannung mittels Vorspannring ist ferner, dass die erzielte Vorspannung in der Regel nur rechnerisch aus den geometrischen Abmessungen der Einzelbauteile bestimmt werden kann. Durch die Aufsummierung der Bauteiltoleranzen ist die rechnerische Bestimmung der erzielten Vorspannung nur ungenau möglich. Eine ausreichend genaue Kontrollmessung im montierten Zustand ist ebenfalls nicht möglich.

### Offenbarung der Erfindung

Aufgabe der Erfindung ist es daher, eine Rotorlagereinheit für eine Windenergieanlage und ein Verfahren zur Einstellung der axialen Vorspannung in einer solchen Rotorlagereinheit anzugeben, durch die die Genauigkeit der Einstellung der axialen Vorspannung verbessert, Setzerscheinungen und die Wartungsanfälligkeit verringert und die Lebensdauer der Rotorlagereinheit erhöht wird.

Diese Aufgabe wird gelöst durch eine Rotorlagereinheit mit den Merkmalen des Anspruchs 1.

Hierdurch wird eine Rotorlagereinheit für eine Windenergieanlage geschaffen, die eine hülsenartige innere Verbindungskonstruktion umfasst, die sich entlang einer zentralen Achse erstreckt. Die Rotorlagereinheit umfasst ferner eine koaxial zur inneren Verbindungskonstruktion angeordnete, hülsenartige äußere Verbindungskonstruktion und zwei axial zueinander beabstandet angeordnete Kegelrollenlager mit jeweils zumindest einem an der inneren Verbindungskonstruktion befestigten inneren Lagerring und jeweils zumindest einem an der äußeren Verbindungskonstruktion befestigten äußeren Lagerring. An der inneren und/oder der äußeren Verbindungskonstruktion ist zumindest ein sich radial erstreckender Befestigungsflansch mit einer axialen Befestigungsfläche ausgebildet. Erfindungsgemäß ist vorgesehen, dass dem Befestigungsflansch einer der Lagerringe zugeordnet ist, welcher einen ersten Lochkreis aufweist. Dabei ist der dem Befestigungsflansch zugeordnete Lagerring durch den Lochkreis unter Einbringung einer axialen Vorspannung in die Rotorlagereinheit an der axialen Befestigungsfläche des Befestigungsflansches verschraubt.

In der erfindungsgemäßen Rotorlagereinheit bilden die innere und äußere Verbindungskonstruktion mit den beiden Kegelrollenlagern einen Vorspannkreis, der durch Montage des dem Befestigungsflansches zugeordneten Lagerrings geschlossen wird. Die axiale Verschraubung des Lagerrings bewirkt zugleich die Befestigung des Lagerrings an der Verbindungskonstruktion, als auch die Einbringung einer durch ein Untermaß zwischen innerer und äußerer Verbindungskonstruktion vorbestimmten axialen Vorspannung. Durch die gleiche, axiale Wirkrichtung der Befestigungs- und der Vorspannungskräfte des Lagerrings wird eine genaue Einstellung einer vorbestimmten axialen Vorspannung, unbeeinflusst von radial wirkenden Befestigungskräften, wie sie beispielsweise bei Verwendung einer Presspassung zur Befestigung des Lagerrings auftreten, möglich. Es entsteht dadurch eine einbaufertige Rotorlagereinheit mit vorgespannten Kegelrollenlagern, die für höchste zyklische Beanspruchungen ausgelegt ist.

Die verschraubte Montage des Lagerrings ist ferner vorteilhaft, weil die mechanische Fixierung des Lagerrings ein Ringwandern unmöglich macht, so dass das Ringwandern auch bei höchsten Beanspruchungen sicher vermieden wird. Korrosion an der Befestigungsfläche des Lagerrings und eine dadurch verursachte Verstellung der axialen Vorspannung sind somit durch die erfindungsgemäße Montage der Rotorlagereinheit reduziert, wodurch die Wartungsanfälligkeit der Rotorlagereinheit reduziert und die Lebensdauer verlängert ist.

Vorzugweise ist die Verschraubung dazu ausgelegt, die im Betrieb der Windenergieanlage über das Kegelrollenlager des verschraubten Lagerrings auf den verschraubten Lagerring einwirkenden Kräfte und Momente vollständig zu übertragen. Die Verschraubung steht somit im Kraftfluss der Rotorlagereinheit zur Ableitung der betrieblichen Kräfte der Windenergieanlage in den Turm bzw. das Fundament der Windenergieanlage. Vorzugsweise bildet die Verschraubung die einzige Befestigung des Lagerrings an der zugeordneten Verbindungskonstruktion, wodurch eine besonders einfache Montage bzw. Demontage des Lagerrings ermöglicht wird.

In bevorzugten Ausführungsformen ist der Befestigungsflansch an einem axialen Ende der zugeordneten Verbindungskonstruktion angeordnet und die Verbindungskonstruktion schließt mit der axialen Befestigungsfläche in axialer Richtung ab. In diesem Fall endet die dem verschraubten Lagerring zugeordnete Verbindungskonstruktion an dem radialen Flansch, so dass die Verbindungskonstruktion insbesondere keinen den Lagerring umgreifenden, oder in radialer Richtung abstützenden Abschnitt aufweist. Die Verbindungskonstruktion, welche meist als Gussbauteil ausgebildet ist, weist dadurch eine besonders einfache Geometrie auf, die lediglich im Bereich der planen Befestigungsfläche auf Maß endbearbeitet werden muss. Ferner ist die Bauhöhe der Rotorlagereinheit im Bereich des Kegelrollenlagers in radialer Richtung auf die radiale Abmessung des Lagerrings reduziert. Ein Bauhöhennachteil, welcher durch die Verstärkung des Rings für die Anordnung des ersten Lochkreises entsteht, kann somit durch Verzicht auf einen den verschraubten Lagerring umgreifenden Abschnitt der Verbindungskonstruktion ausgeglichen werden. Bei gleicher Bauhöhe können zudem zur Optimierung der Lebensdauer der Rotorlagereinheit größere Rollen als Wälzkörper eingesetzt werden. Die Rotorlagereinheit zeichnet sich durch eine besonders hohe statische und dynamische Tragfähigkeit aus, welche insbesondere für große Naben von Vorteil ist.

Bevorzugt weisen die Lagerringe der Kegelrollenlager einen Innendurchmesser von mehr als 3 Metern und besonders bevorzugt von mehr als 5 Metern auf.

Ferner bevorzugt ist der Befestigungsflansch an der Verbindungskonstruktion auf der von der jeweils anderen Verbindungskonstruktion radial abgewandten Seite angeordnet. Durch diese Anordnung des Befestigungsflansches wird die Montage des verschraubten Lagerrings erleichtert. Ferner sind so Ausführungsformen der Rotorlagereinheit mit besonders geringen radialen Bauhöhen möglich, bei denen die hülsenartige innere bzw. äußere Verbindungskonstruktion einen größeren Innen- bzw. kleineren Außendurchmesser als die Innen- bzw. Außenringe der Kegelrollenlager aufweist. Der hülsenartige Grundkörper der Verbindungskonstruktionen erstreckt sich bevorzugt als Axialstütze zwischen den Lagerringen innerhalb von deren radialer Bauhöhe.

Zur Einstellung einer vorbestimmten axialen Vorspannung kann die Befestigungsfläche des Befestigungsflansches auf Maß gefertigt werden und der Lagerring unmittelbar daran anliegend verschraubt werden. Alternativ ist es möglich, dass in der Verschraubung zwischen dem Befestigungsflansch und dem Lagerring ein Anpassring zur Einstellung der axialen Vorspannung der Rotorlagereinheit eingefügt ist. Dies hat den Vorteil, dass bei der Montage und/oder im Falle von Setzerscheinungen im Betrieb eine Anpassung der axialen Vorspannung durch Austausch oder Nachbearbeitung des Anpassrings erfolgen kann, ohne dass die Rotorlagereinheit vollständig demontiert werden muss.

In einigen Ausführungsformen sind die Kegelrollenlager in O-Anordnung angeordnet, die innere Verbindungskonstruktion ist mit mindestens einem Befestigungsflansch ausgebildet, der mit dem inneren Lagerring eines der beiden Kegelrollenlager verschraubt ist, und die übrigen Lagerringe sind mittels Presspassung an der jeweils zugeordneten Verbindungskonstruktion befestigt. Bei dieser Lageranordnung ist die Verschraubung der Lagerringe innerhalb des durch die Lager und die Verbindungskonstruktionen gebildeten Vorspannkreises an einem, inneren Lagerring vorgesehen, durch den der Vorspannkreis nach Montage der übrigen Komponenten geschlossen wird. Diese Bauweise vereint die Vorteile radial kleinbauender geschrumpfter Lagerringe mit der einfachen und genauen Einstellung der axialen Vorspannung durch Verschraubung des zuletzt zu montierenden, verschraubten Lagerrings. Alternativ ist auch eine X-Anordnung der Kegelrollenlager denkbar, wobei dann zumindest einer der Außenringe mit der äußeren Verbindungskonstruktion auf die erfindungsgemäße Weise verschraubt ist.

In anderen Ausführungsformen sind die Kegelrollenlager in O-Anordnung angeordnet, die innere Verbindungskonstruktion ist mit zwei Befestigungsflanschen ausgebildet, die mit den inneren Lagerringen der beiden Kegelrollenlager verschraubt sind, und die äußeren Lagerringe sind mittels einer Presspassung in der äußeren Verbindungskonstruktion befestigt. Alternativ ist eine X-Anordnung der Kegelrollenlager denkbar, wobei dann die beiden Außenringe mit der äußeren Verbindungskonstruktion auf erfindungsgemäße Weise verschraubt sind.

In weiteren Ausführungsformen sind die innere und die äußere Verbindungskonstruktion jeweils mit zwei Befestigungsflanschen ausgebildet, an denen die inneren und die äußeren Lagerringe der beiden Kegelrollenlager verschraubt sind. Folglich sind beide Lagerringe der beiden Kegelrollenlager mit den Verbindungskonstruktionen verschraubt und es kann vollständig auf die aufwändige, engtolerierte Bearbeitung von Passflächen für eine Presspassung und die Montage von Lagerringen durch Presspassung, beispielsweise durch thermisches Aufschrumpfen, verzichtet werden. Dies ermöglicht einen einfachen Ein- und Ausbau der Lagerringe, falls nötig auch im Feld.

Ein weiterer Vorteil bei der Verwendung mindestens eines, vorzugsweise zweier vollständig verschraubter Kegelrollenlager ist die modularisierte Bauweise. Die Verbindungskonstruktionen und die Kegelrollenlager sind über Lochkreise als standardisierte Schnittstellen miteinander verbunden und können getrennt voneinander an den jeweiligen Anwendungsfall angepasst gewählt werden. Bei Weiterentwicklungen der Rotorlagereinheit brauchen ferner keine neuen Gussmodelle für die Verbindungskonstruktionen erstellt werden, selbst wenn sich Änderungen an den verwendeten Lagerringen ergeben, sofern der Lochkreis unverändert bleibt. So können auf einfache Weise Lager mit unterschiedlichen Tragwinkeln, längeren Rollen, größeren Durchmessern, etc. eingesetzt werden, ohne die Verbindungskonstruktionen zu ändern. Umgekehrt kann durch den Einsatz längerer oder kürzerer Verbindungskonstruktionen der Lagerabstand bei gleichen Kegelrollenlagern angepasst werden. Die Voraussetzungen zum einfachen Aufbau eines modularen Baukastensystems für unterschiedliche Turbinentypen sind somit gegeben.

Bevorzugt weist der mit der inneren oder äußeren Verbindungskonstruktion verschraubte Lagerring einen zusätzlichen Lochkreis für eine Befestigung der Rotorlagereinheit in einer Windenergieanlage auf. Für die Einbringung des zusätzlichen Lochkreises weist der verschraubte Lagerring eine erhöhte radiale Bauhöhe auf, die den Lagerring verstärkt und die Biegesteifigkeit der Rotorlagereinheit erhöht.

Die Aufgabe wird ferner gelöst durch eine Windenergieanlage mit einem Turm, einer an dem Turm befestigten Gondel und einem an der Gondel befestigten Rotor, wobei der Rotor an der Gondel über eine erfindungsgemäße Rotorlagereinheit drehbar gelagert ist. Die erfindungsgemäße Rotorlagereinheit kann insbesondere als einbaufertige Einheit geliefert und in der Windenergieanlage durch Verschraubung mit Gondel und Rotor montiert sein.

In bevorzugten Ausführungsformen weisen die Gondel und der Rotor jeweils eine Anschlusskonstruktion für die Montage der Rotorlagereinheit auf und die Rotorlagereinheit ist an der Gondel und/oder dem Rotor mittels der Verschraubung des Befestigungsflansches mit dem zugeordneten Lagerring befestigt. Dabei erstrecken sich Schrauben der Verschraubung durch den Befestigungsflansch, den Lagerring und Befestigungsbohrungen in der jeweiligen Anschlusskonstruktion. Die Verschraubung des Lagerrings an der Verbindungskonstruktion dient in diesem Fall folglich gleichzeitig der Befestigung der Rotorlagereinheit an der zugeordneten Anschlusskonstruktion. Die Verschraubung überträgt damit nicht nur die betrieblichen Kräfte innerhalb der Rotorlagereinheit, sondern stellt gleichzeitig die Übertragung der Kräfte in die benachbarten Komponenten der Windenergieanlage bereit.

In manchen Ausführungsformen weisen die Gondel und der Rotor eine Anschlusskonstruktion für die Montage der Rotorlagereinheit auf und die Rotorlagereinheit ist an der Gondel und/oder dem Rotor mittels einer zweiten Verschraubung der jeweiligen Anschlusskonstruktion an einem zweiten Lochkreis des mit der Verbindungskonstruktion verschraubten Lagerrings befestigt.

Verfahrensmäßig wird die Aufgabe durch ein Verfahren zur Einstellung einer axialen Vorspannung in einer erfindungsgemäßen Rotorlagereinheit gelöst, bei dem die axiale Vorspannung der Rotorlagereinheit bestimmt und bei Abweichung von einem Sollbereich durch Montage mindestens eines Anpassringes in der Verschraubung zwischen Befestigungsflansch und Lagerring oder durch Nachbearbeitung der Befestigungsfläche in den Sollbereich eingestellt wird. Da die axiale Befestigungsfläche des Befestigungsflansches nicht nur einen Verankerungspunkt für den Lagerring bildet, sondern über ihre axiale Positionierung zugleich Einfluss auf die axiale Vorspannung der Rotorlagereinheit hat, kann durch einfaches Nacharbeiten der Befestigungsfläche und/oder Einfügen eines passenden Anpassringes die axiale Vorspannung der Lagereinheit eingestellt werden. Der passende Anpassring kann beispielsweise aus einem Satz vorgefertigter Anpassringe mit unterschiedlicher Dicke ausgewählt oder als Ringpaket aus dem Satz vorgefertigter Anpassringe zusammengestellt werden. Das erspart ein Nacharbeiten und führt zu einer Zeitersparnis im Rahmen der Montage. Bevorzugt ist vorgesehen, dass die Vorspannung in einem teilmontierten Zustand der Rotorlagereinheit vor Montage des zuletzt zu montierenden, verschraubten Lagerrings durch Vermessung eines axialen Abstandes von zwei Referenzflächen bestimmt wird. Die Referenzflächen sind an dem Befestigungsflansch und dem bereits montierten, anderen Lagerring des Kegelrollenlagers, welches durch die Montage des verschraubten Lagerrings gebildet wird, angeordnet. Durch die Vermessung der teilmontierten Rotorlagereinheit kann die Bestimmung der axialen Vorspannung besonders genau erfolgen, da keine rechnerische Berücksichtigung von Toleranzen erfolgen muss, sondern die Ist-Werte der teilmontierten Rotorlagereinheit verwendet werden können. Insbesondere unter Berücksichtigung der Tatsache, dass die üblicherweise als Gussteile gefertigten Verbindungskonstruktionen im Vergleich zu dem zuletzt zu verschraubenden Lagerring mit wesentlich größeren Toleranzen gefertigt sind, wird der weitaus größte Teil der Einflussfaktoren auf die axiale Vorspannung bei einer Vermessung im teilmontierten Zustand berücksichtigt.

Alternativ oder zusätzlich kann die axiale Vorspannung im zusammengebauten Zustand der Rotorlagereinheit von einer als Wälzkörper in eines der Kegelrollenlager eingebrachten Messrolle in Abhängigkeit vom Umfangswinkel des Kegelrollenlagers aufgenommen werden. Als Wälzkörper verwendete Messrollen sind dazu ausgelegt, positionsabhängig die Belastung der Messrolle im Lager zu detektieren. Bei einer Vermessung der Rotorlagereinheit im lastlosen Zustand kann aus der Varianz der Messwerte über einen Umlauf auf eine ungleichmäßige axiale Vorspannung geschlossen werden. Während des Einsatzes in einer Windenergieanlage können insbesondere zeitabhängige Veränderungen der Messwerte an derselben Position auf eine im Betrieb eingetretene Veränderung der axialen Vorspannung hindeuten, die eine erneute Einstellung der axialen Vorspannung erforderlich machen können.

Alternativ oder zusätzlich kann die axiale Vorspannung im zusammengebauten Zustand der Rotorlagereinheit mittels Dehnungsmessstreifen und/oder Messunterlegscheiben an der Verschraubung durch eine Differenzmessung im Zeitverlauf bestimmt werden.

Weitere vorteilhafte Ausführungsformen sind der nachfolgenden Beschreibung und den Unteransprüchen zu entnehmen.

Die Erfindung wird nachstehend anhand der in den beigefügten Abbildungen dargestellten Ausführungsbeispiele näher erläutert.

### Kurzbeschreibung der Zeichnungen

- Fig. 1: zeigt schematisch eine erfindungsgemäße Windenergieanlage, deren Rotor an der Gondel über eine erfindungsgemäße Rotorlagereinheit drehbar gelagert ist,
- Fig. 2: zeigt schematisch ein erstes Ausführungsbeispiel der erfindungsgemäßen Rotorlagereinheit mit zwei Kegelrollenlagern, wobei einer der inneren Lagerringe mit der inneren Verbindungskonstruktion unter Einfügung eines Anpassrings verschraubt ist,
- Fig. 3: zeigt schematisch ein zweites Ausführungsbeispiel der erfindungsgemäßen Rotorlagereinheit, wobei die inneren und die äußeren Lagerringe der Kegelrollenlager mit der jeweils zugeordneten inneren oder äußeren Verbindungskonstruktion verschraubt sind,
- Fig. 4: zeigt schematisch ein drittes Ausführungsbeispiel der erfindungsgemäßen Rotorlagereinheit, wobei die inneren Lagerringe beider Kegelrollenlager mit der inneren Verbindungskonstruktion verschraubt sind,
- Fig. 5: zeigt schematisch eine Variante des Ausführungsbeispiels nach Fig. 3, wobei der mit der äußeren Verbindungskonstruktion verschraubte Lagerring einen zusätzlichen Lochkreis für die Befestigung an einer Anschlusskonstruktion einer Windenergieanlage aufweist.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

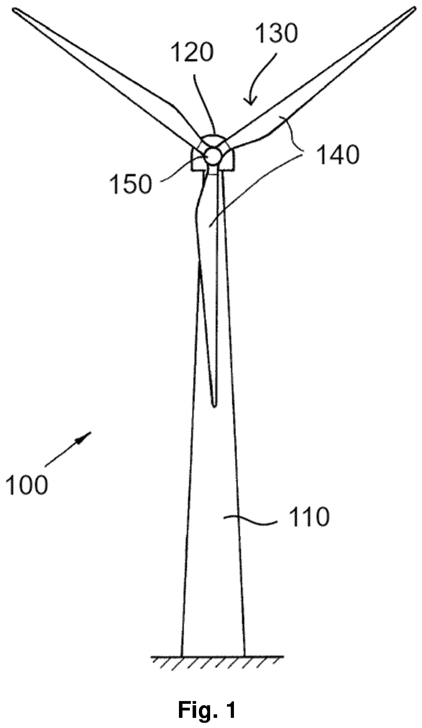

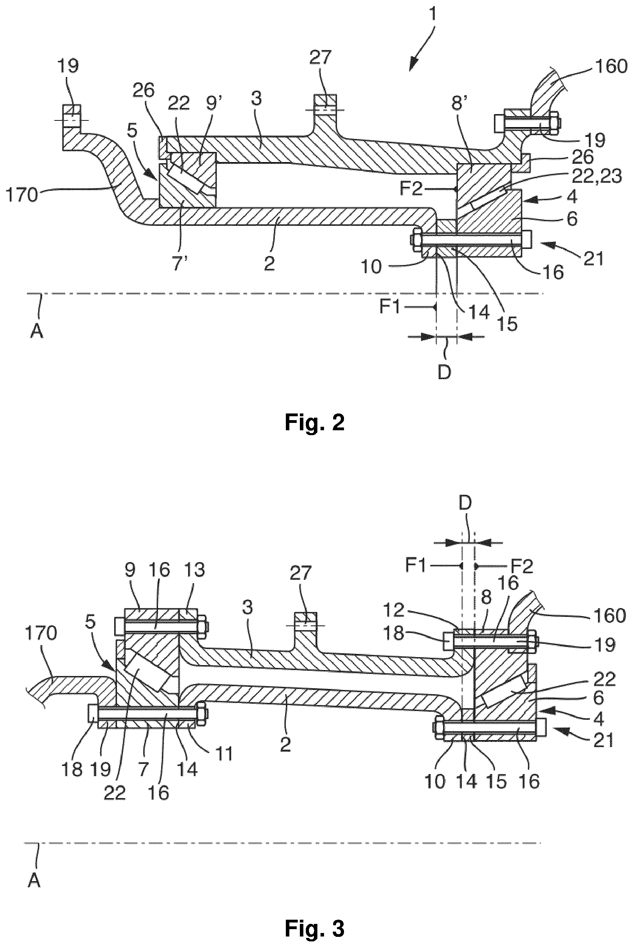

In **Fig. 1** ist eine Windenergieanlage 100 mit einem Turm 110, einer an dem Turm 110 befestigten Gondel 120 und einem an der Gondel 120 befestigten Rotor 130 gezeigt. Der Rotor 130 ist an der Gondel 120 über eine erfindungsgemäße Rotorlagereinheit 1 drehbar gelagert, wie sie nachfolgend im Hinblick auf die in den Fig. 2 bis 5 gezeigten Ausführungsbeispiele näher beschrieben ist.

In **Fig. 2** ist ein erstes Ausführungsbeispiel der erfindungsgemäßen Rotorlagereinheit 1 für eine Windenergieanlage 100 (vgl. Fig. 1) gezeigt. Die Rotorlagereinheit 1 umfasst eine hülsenartige innere Verbindungskonstruktion 2, die sich entlang einer zentralen Achse A erstreckt, eine koaxial zur inneren Verbindungskonstruktion 2 angeordnete, hülsenartige äußere Verbindungskonstruktion 3 und zwei axial zueinander beabstandet angeordnete Kegelrollenlager 4, 5 mit jeweils zumindest einem an der inneren Verbindungskonstruktion 2 befestigten inneren Lagerring 6, 7' und jeweils zumindest einem an der äußeren Verbindungskonstruktion 3 befestigten äußeren Lagerring 8', 9'. An der inneren Verbindungskonstruktion 2 ist ein sich radial erstreckender Befestigungsflansch 10 mit einer axialen Befestigungsfläche 14 ausgebildet. Dem Befestigungsflansch 10 ist ein Lagerring 6 der Lagerringe 6, 7', 8', 9' zugeordnet, welcher einen ersten Lochkreis 16 aufweist. Durch den Lochkreis 16 ist der dem Befestigungsflansch 10 zugeordnete Lagerring 6 unter Einbringung einer axialen Vorspannung in die Rotorlagereinheit 1 an der axialen Befestigungsfläche 14 des Befestigungsflansches 10 verschraubt.

Die Kegelrollenlager 4, 5 sind in Fig. 2 in O-Anordnung angeordnet. Die innere Verbindungskonstruktion 2 ist mit einem Befestigungsflansch 10 ausgebildet, der mit dem inneren Lagerring 6 eines der beiden Kegelrollenlager 4 verschraubt ist, und die übrigen Lagerringe 7', 8', 9' sind mittels Presspassung an der jeweils zugeordneten Verbindungskonstruktion 2, 3 befestigt. Soweit in der Rotorlagereinheit 1 nur ein Lagerring mit der zugeordneten Verbindungskonstruktion verschraubt wird, wird bevorzugt der upwind-seitige Lagerring an der stehenden Verbindungskonstruktion für die Verschraubung ausgewählt, weil dieser erfahrungsgemäß besonders gefährdet ist, einer Ringwanderung zu unterliegen. In der bevorzugten O-Anordnung der Kegelrollenlager ist dies der upwind-seitige Innenring 6.

Der Lagerring 6 ist wie alle im Rahmen dieser Offenbarung beschriebenen verschraubten Lagerringe 6, 7, 8, 9 vorzugsweise aus einem induktiv härtbaren Wälzlagerstahl, beispielsweise 42CrMo4 gefertigt und weist eine induktiv gehärtete Lagerlaufbahn für die Wälzkörper 22 auf. An den geschrumpften Lagerringen 7', 8', 9' werden die Lagerlaufbahnen zusammen mit der gesamten Oberfläche üblicherweise einsatzgehärtet. Ein induktives Härten der Laufbahnen würde in diesem Fall aufgrund des geringen Ringquerschnitts zu einem nicht mehr tolerierbaren Härteverzug führen. Die Verwendung von induktiv härtbaren Wälzlagerstählen für die verschraubten Lagerringe 6, 7, 8, 9 hat den Vorteil der besseren Bearbeitbarkeit, wodurch beispielsweise der Lochkreis 16 einfacher einzubringen ist. Induktiv härtbare Wälzlagerstähle, insbesondere 42CrMo4 besitzen zugleich hohe statische und dynamische Festigkeiten und hohe Kerbschlagzähigkeiten, so dass in den Lagerungsbereichen der Rotorlagereinheit 1 hohe zyklische Festigkeiten erzielt werden können.

Die Verschraubung des Lagerrings 6 ist dazu ausgelegt, die im Betrieb der Windenergieanlage 100 (vgl. Fig. 1) über das Kegelrollenlager 4 des verschraubten Lagerrings 6 auf den verschraubten Lagerring 6 einwirkenden Kräfte und Momente vollständig zu übertragen.

Wie in Fig. 2 gezeigt, ist der Befestigungsflansch 10 bevorzugt an einem axialen Ende der zugeordneten Verbindungskonstruktion 2 angeordnet und die Verbindungskonstruktion 2 schließt mit der axialen Befestigungsfläche 14 in axialer Richtung ab.

Der Befestigungsflansch 10 ist vorzugsweise an der Verbindungskonstruktion 2 auf der von der jeweils anderen Verbindungskonstruktion 3 radial abgewandten Seite angeordnet ist. Ein Befestigungsflansch an der inneren Verbindungskonstruktion 2 erstreckt sich demnach bevorzugt radial nach innen und ein Befestigungsflansch an der äußeren Verbindungskonstruktion 3 bevorzugt radial nach außen.

Wie ebenfalls in Fig. 2 gezeigt, kann in der Verschraubung zwischen dem Befestigungsflansch 10 und dem Lagerring 6 ein Anpassring 15 zur Einstellung der axialen Vorspannung der Rotorlagereinheit 1 eingefügt sein.

Die innere und/oder die äußere Verbindungskonstruktion 2, 3 können zusätzlich Funktionsanbauten 27 aufweisen. Dabei kann es sich beispielsweise um einen Flansch zur Verbindung mit dem Rotor eines Generators oder mit einem Getriebeeingang an der drehenden Verbindungskonstruktion der Rotorlagereinheit handeln. Ein anderer Funktionsanbau kann beispielsweise eine Feststellvorrichtung sein, durch die eine Relativbewegung von äußerer und innerer Verbindungskonstruktion zueinander mechanisch blockiert werden kann.

**In** **Fig. 3** ist ein zweites Ausführungsbeispiel der erfindungsgemäßen Rotorlagereinheit 1 gezeigt. Bei diesem Ausführungsbeispiel sind die innere Verbindungskonstruktion 2 und die äußere Verbindungskonstruktion 3 jeweils mit zwei Befestigungsflanschen 10, 11; 12, 13 ausgebildet. An den Befestigungsflanschen 10, 11; 12, 13 sind die inneren Lagerringe 6, 7 und die äußeren Lagerringe 8, 9 der beiden Kegelrollenlager 4, 5 verschraubt.

In einer Windenergieanlage 100 (vgl. Fig. 1), deren Gondel 120 und Rotor 130 jeweils eine Anschlusskonstruktion 160, 170 für die Montage der Rotorlagereinheit 1 aufweisen, kann die die Rotorlagereinheit 1 an der Gondel 120 und/oder dem Rotor 130 mittels der Verschraubung des Befestigungsflansches 11, 12 mit dem zugeordneten Lagerring 7, 8 befestigt sein, wobei sich Schrauben 18 der Verschraubung durch den Befestigungsflansch 11, 12, den Lagerring 7, 8 und Befestigungsbohrungen 19 in der jeweiligen Anschlusskonstruktion 160, 170 erstrecken. Durch die Verwendung derselben Verschraubung 21 zur Befestigung des Lagerrings an der Verbindungskonstruktion und der Anschlusskonstruktion werden radialer Bauraum und Fertigungskosten eingespart.

Durch die ausschließliche Verwendung von verschraubten Lagerringen 6, 7, 8, 9 ist die Geometrie der Verbindungskonstruktionen 2, 3 in diesem Ausführungsbeispiel vereinfacht. Durch axiale Verschraubung wird ein innerer und ein äußerer Ringstapel aus zwei Lagerringen und der dazwischen angeordneten inneren oder äußeren Verbindungskonstruktion 2, 3 gebildet. Es können somit einfache Gussmodelle für die Verbindungskonstruktionen 2, 3 mit Standardlagern oder auch einbaufertigen gedichteten Lagern kombiniert werden, wodurch sich Entwicklungen für neue Turbinengenerationen schneller umsetzen lassen. Ferner sind die axialen Abmessungen der Verbindungskonstruktionen 2, 3 auf den Bereich zwischen den Kegelrollenlagern 4, 5 reduziert, was Vorteile in der Fertigung, Logistik, Montage und auch der Qualität der Gussbauteile mit sich bringt. Sämtliche Lagerringe 6, 7, 8, 9 lassen sich einfach montieren und demontieren, ohne die Rotorlagereinheit 1 zu gefährden. Auf beiden Seiten der Lagerringe können wiederum Ringe oder Anschlusskonstruktionen aus beliebigem Material eingesetzt werden. Um ein radiales Versetzen der Lagerringe in der Verschraubung zu verhindern, können die axialen Ringkontaktflächen gestrahlt und/oder beschichtet werden, um den Reibwert zu erhöhen.

Im Übrigen gelten die Ausführungen zum ersten Ausführungsbeispiel entsprechend.

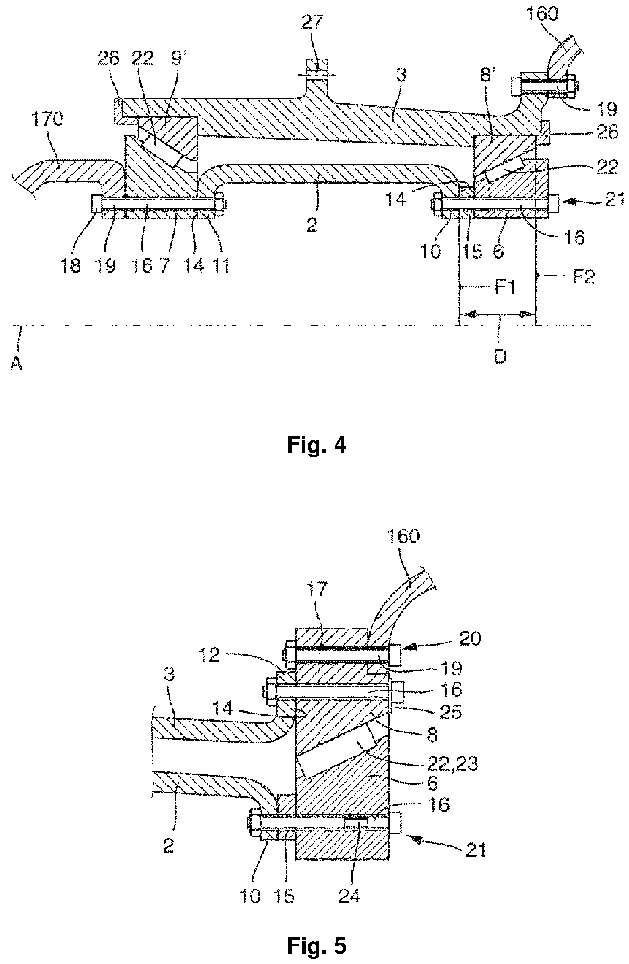

**Fig. 4** zeigt ein drittes Ausführungsbeispiel der erfindungsgemäßen Rotorlagereinheit, in dem die Kegelrollenlager 4, 5 in O-Anordnung angeordnet sind, die innere Verbindungskonstruktion 2 mit zwei Befestigungsflanschen 10, 11 ausgebildet ist, die mit den inneren Lagerringen 6, 7 der beiden Kegelrollenlager 4, 5 verschraubt sind, und die äußeren Lagerringe 8', 9' mittels einer Presspassung in der äußeren Verbindungskonstruktion 3 befestigt sind.

Im Übrigen gelten die Ausführungen zum ersten und zweiten Ausführungsbeispiel entsprechend.

**Fig. 5** zeigt eine Variante des zweiten Ausführungsbeispiels, bei der der mit der äußeren Verbindungskonstruktion 3 verschraubte Lagerring 8 einen zweiten Lochkreis 17 für eine Befestigung der Rotorlagereinheit 1 in einer Windenergieanlage 100 (vgl. Fig. 1) aufweist. Im dargestellten Fall dient der zweite Lochkreis 17 zu Befestigung der Rotorlagereinheit 1 an der Anschlusskonstruktion 160 der Nabe 150. Abhängig von der Position des verschraubten Lagerrings 6, 7, 8, 9 in der Rotorlagereinheit und vom Typ der Windenergieanlage kann der zweite Lochkreis 17, aber auch an einem verschraubten inneren Lagerring 6, 7 vorgesehen sein und/oder zur Befestigung an der anderen Anschlusskonstruktion 170 dienen.

Mit der in Fig. 5 gezeigten Variante wird eine Windenergieanlage 100 mit einer Rotorlagereinheit 1 geschaffen, bei der die Gondel 120 und der Rotor 130 jeweils eine Anschlusskonstruktion 160, 170 für die Montage der Rotorlagereinheit 1 aufweisen und die Rotorlagereinheit 1 an der Gondel 120 und/oder dem Rotor 130 mittels einer zweiten Verschraubung 20 der jeweiligen Anschlusskonstruktion 160, 170 an dem zweiten Lochkreis 17 des mit der Verbindungskonstruktion 3 verschraubten Lagerrings 8 befestigt ist.

Ein separater zweiter Lochkreis 17 zur Verbindung mit der Anschlusskonstruktion 160, 170 bietet insbesondere Vorteile hinsichtlich der Flexibilität bei der Gestaltung der Anschlusskonstruktion 160, 170, da die Anpassung der Rotorlagereinheit 1 auf einen gegebenen Lochkreis der Anschlusskonstruktion 160, 170 einfacher möglich ist. Ferner kann die Montage der Rotorlagereinheit 1 durch einen separaten Lochkreis 17 vereinfacht und die Führung des Kraftflusses unter betrieblichen Belastungen kann optimiert sein.

Die Montage der Rotorlagereinheit erfolgt bei der in den Figuren 2 bis 5 gezeigten O-Anordnung der Kegelrollenlager 4, 5 in folgenden Schritten:
Zunächst werden die Lagerringe 7 bzw. 7', 8 bzw. 8' und 9 bzw. 9' an den jeweils zugeordneten Verbindungskonstruktionen 2, 3 befestigt. Dazu werden - soweit vorhanden - zunächst die in Presspassung zu befestigenden Lagerringe 7', 8', 9' durch thermisches Schrumpfen an der zugehörigen Verbindungskonstruktion 2, 3 montiert. Für die korrekte axiale Positionierung der Lagerringe sind an den Verbindungskonstruktionen 2, 3 Wellenabsätze vorgesehen, welche mechanische Anschläge für die Lagerringe 7', 8', 9' bilden. Die mechanischen Anschläge jeweils auf der Seite des Lagerrings 7', 8', 9' positioniert, dass sie die auf den Lagerring 7', 8', 9' unter Wirkung der axialen Vorspannung wirkenden Kräfte aufnehmen können. Gegebenenfalls können die auf- bzw. eingeschrumpften Lagerringe 7', 8`, 9' jeweils zusätzlich durch Sicherungsringe 26 gesichert werden.

Die übrigen der Lagerringe 7, 8, 9 werden an dem jeweils zugeordneten Flansch 11, 12, 13 der zugehörigen Verbindungskonstruktion 2, 3 verschraubt. Dazu werden Schrauben durch den Lochkreis 16 des Lagerrings 7, 8, 9 und Bohrungen im Befestigungsflansch 11, 12, 13 geführt. Soweit die Verschraubung gleichzeitig der Befestigung der Rotorlagereinheit 1 an der Anschlusskonstruktion 160, 170 von Nabe 150 bzw. Gondel 120 dienen soll, können ab Werk zunächst eine geringere Anzahl Montageschrauben verwendet werden, die dann bei Montage der Rotorlagereinheit 1 in der Windenergieanlage vor Ort durch die Schrauben 18 ersetzt werden. Für die Montageschrauben können auch gesonderte Bohrungen (nicht dargestellt) in Lagerring und Verbindungskonstruktion vorgesehen sein.

Anschließend werden die Verbindungskonstruktionen 2, 3 mit den montierten Lagerringen 7, 8, 9 ineinander geführt und die Wälzkörper 22 des Wälzlagers 5 eingebracht.

Nun wird die axiale Vorspannung in der Rotorlagereinheit 1 eingestellt, indem die axiale Vorspannung der Rotorlagereinheit 1 bestimmt und bei Abweichung von einem Sollbereich durch Montage eines Anpassringes 15 in der letzten Verschraubung 21 zwischen Befestigungsflansch 10 und Lagerring 6 oder durch Nachbearbeitung der Befestigungsfläche 14 in den Sollbereich eingestellt wird.

In dem beschriebenen teilmontierten Zustand der Rotorlagereinheit 1 wird die axiale Vorspannung vor Montage des zuletzt zu montierenden, verschraubten Lagerrings 6 durch Vermessung eines axialen Abstandes D von zwei Referenzflächen F1, F2 bestimmt, die an dem Befestigungsflansch 10 und dem bereits montierten, anderen Lagerring 8 des Kegelrollenlagers 4, welches durch die Montage des verschraubten Lagerrings 6 gebildet wird, angeordnet sind. Die Vorspannung ergibt sich dabei - in O-Anordnung der Kegelrollenlager - aus dem unter Berücksichtigung der geometrischen Abmessungen des zuletzt zu montierenden Lagerrings 6 verbleibenden axialen Untermaß der inneren Komponenten 2, 6, 7 der Rotorlagereinheit 1 gegenüber den äußeren Komponenten 3, 8, 9.

Bevorzugt ist die Referenzfläche F1 durch die Befestigungsfläche 14 an dem dem zuletzt zu montierenden Lagerring 6 zugeordneten Befestigungsflansch 10 gebildet und die Referenzfläche F2 ist eine der Stirnflächen des anderen Lagerrings 8. Der Abstand D der Referenzflächen F1, F2 wird ferner bevorzugt an mehreren über den Umfang der Rotorlagereinheit 1 verteilten Stellen oder auch über den Umfang kontinuierlich vermessen. Entsprechend positionsabhängig kann die Befestigungsfläche 14 nachbearbeitet bzw. der Anpassring 15 gefertigt werden.

Nach der Nachbearbeitung der Befestigungsfläche 14 und/oder dem Einfügen des Anpassrings 15 kann die Rotorlagereinheit 1 durch Montage des letzten Lagerrings 6 endmontiert werden.

Auch nach der Endmontage und/oder im Betrieb kann die axiale Vorspannung in der Rotorlagereinheit 1 überwacht und bei Bedarf neu eingestellt werden. Dazu kann bevorzugt die axiale Vorspannung im zusammengebauten Zustand der Rotorlagereinheit 1 von einer als Wälzkörper 22 in eines der Kegelrollenlager 4, 5 eingebrachten Messrolle 23 in Abhängigkeit vom Umfangswinkel des Kegelrollenlagers 4, 5 aufgenommen werden.

Alternativ oder zusätzlich kann die axiale Vorspannung im zusammengebauten Zustand der Rotorlagereinheit 1 mittels Dehnungsmessstreifen 24 und/oder Messunterlegscheiben 25 an der Verschraubung durch eine Differenzmessung im Zeitverlauf bestimmt werden. Dafür wird nach Montage der Rotorlagereinheit in der Windenergieanlage 100 zumindest eine Referenzmessung unter Last aufgenommen. Die Resultate späterer Messungen bei vergleichbarer Lastsituation können dann mit der Referenzmessung verglichen werden. Wenn die Abweichungen ein zulässiges Maximalmaß überschreiten, wird eine Neueinstellung/Nachjustierung der axialen Vorspannung vorgenommen.

Sämtliche der in den Figuren gezeigten Ausführungsbeispiele lassen sich im Rahmen der Kenntnisse eines Fachmanns auch mit einer X-Anordnung der Kegelrollenlager ausführen. Bei einer X-Anordnung ist der zuletzt zu montierende, verschraubte Lagerring an der äußeren Verbindungskonstruktion zu befestigen.

Ferner ist dem Fachmann bewusst, dass die in den Figuren vorgestellten Lösungen sowohl für innendrehende als auch für außendrehende Rotorlagereinheiten mit einer Fett- oder einer Ölschmierung eingesetzt werden können. Hierfür sind geeignete Dichtungssysteme an den Kegelrollenlagern der Rotorlagereinheit vorzusehen.

### Bezugszeichenliste

- 1: Rotorlagereinheit
- 2: innere Verbindungskonstruktion
- 3: äußere Verbindungskonstruktion
- 4, 5: Kegelrollenlager
- 6, 7, 7': innerer Lagerring
- 8, 8', 9, 9': äußerer Lagerring
- 10, 11, 12, 13: Befestigungsflansch
- 14: Befestigungsfläche
- 15: Anpassring
- 16: erster Lochkreis
- 17: zweiter Lochkreis
- 18: Schrauben
- 19: Befestigungsbohrungen
- 20, 21: Verschraubung
- 22: Wälzkörper
- 23: Messrolle
- 24: Dehnungsmessstreifen
- 25: Messunterlegscheibe
- 26: Sicherungsring
- 27: Funktionsanbau

- 100: Windenergieanlage
- 110: Turm
- 120: Gondel
- 130: Rotor
- 140: Rotorblatt
- 150: Nabe
- 160: Anschlusskonstruktion der Nabe
- 170: Anschlusskonstruktion der Gondel

- A: Achse der Rotorlagereinheit
- D: Abstand
- F1, F2: Referenzfläche

## Patentansprüche

1. Rotorlagereinheit für eine Windenergieanlage (100) umfassend
eine hülsenartige innere Verbindungskonstruktion (2), die sich entlang einer zentralen Achse (A) erstreckt,
eine koaxial zur inneren Verbindungskonstruktion (2) angeordnete, hülsenartige äußere Verbindungskonstruktion (3) und
zwei axial zueinander beabstandet angeordnete Kegelrollenlager (4, 5) mit jeweils zumindest einem an der inneren Verbindungskonstruktion (2) befestigten inneren Lagerring (6, 7, 7') und jeweils zumindest einem an der äußeren Verbindungskonstruktion (3) befestigten äußeren Lagerring (8, 8', 9, 9'),
wobei an der inneren (2) und/oder der äußeren Verbindungskonstruktion (3) zumindest ein sich radial erstreckender Befestigungsflansch (10, 11, 12, 13) mit einer axialen Befestigungsfläche (14) ausgebildet ist,
**dadurch gekennzeichnet, dass**
dem Befestigungsflansch (10, 11, 12, 13) einer der Lagerringe (6, 7, 8, 9) zugeordnet ist, welcher einen ersten Lochkreis (16) aufweist, durch den der dem Befestigungsflansch (10, 11, 12, 13) zugeordnete Lagerring (6, 7, 8, 9) unter Einbringung einer axialen Vorspannung in die Rotorlagereinheit (1) an der axialen Befestigungsfläche (14) des Befestigungsflansches (10, 11, 12, 13) verschraubt ist.

2. Rotorlagereinheit nach Anspruch 1, **dadurch gekennzeichnet, dass** die Verschraubung dazu ausgelegt ist, die im Betrieb der Windenergieanlage (100) über das Kegelrollenlager (4, 5) des verschraubten Lagerrings (6, 7, 8, 9) auf den verschraubten Lagerring (6, 7, 8, 9) einwirkenden Kräfte und Momente vollständig zu übertragen.

3. Rotorlagereinheit nach Anspruch 1 oder 2, **dadurch gekennzeichnet, dass** der Befestigungsflansch (10, 11; 12, 13) an einem axialen Ende der zugeordneten Verbindungskonstruktion (2; 3) angeordnet ist und die Verbindungskonstruktion (2; 3) mit der axialen Befestigungsfläche (14) in axialer Richtung abschließt.

4. Rotorlagereinheit nach einem der Ansprüche 1 bis 3, **dadurch gekennzeichnet, dass** der Befestigungsflansch (10, 11, 12, 13) an der Verbindungskonstruktion (2; 3) auf der von der jeweils anderen Verbindungskonstruktion (3; 2) radial abgewandten Seite angeordnet ist.

5. Rotorlagereinheit nach einem der Ansprüche 1 bis 4, **dadurch gekennzeichnet, dass** in der Verschraubung zwischen dem Befestigungsflansch (10, 11, 12, 13) und dem Lagerring (6; 7; 8; 9) ein Anpassring (15) zur Einstellung der axialen Vorspannung der Rotorlagereinheit (1) eingefügt ist.

6. Rotorlagereinheit nach einem der Ansprüche 1 bis 5, **dadurch gekennzeichnet, dass** die Kegelrollenlager (4, 5) in O-Anordnung angeordnet sind, die innere Verbindungskonstruktion (2) mit mindestens einem Befestigungsflansch (10, 11) ausgebildet ist, der mit dem inneren Lagerring (6; 7) eines der beiden Kegelrollenlager (4; 5) verschraubt ist, und die übrigen Lagerringe (7; 6, 8, 9) mittels Presspassung an der jeweils zugeordneten Verbindungskonstruktion (2, 3) befestigt sind.

7. Rotorlagereinheit nach einem der Ansprüche 1 bis 6, **dadurch gekennzeichnet, dass** die Kegelrollenlager (4, 5) in O-Anordnung angeordnet sind, die innere Verbindungskonstruktion (2) mit zwei Befestigungsflanschen (10, 11) ausgebildet ist, die mit den inneren Lagerringen (6, 7) der beiden Kegelrollenlager (4, 5) verschraubt sind, und die äußeren Lagerringe (8, 9) mittels einer Presspassung in der äußeren Verbindungskonstruktion (3) befestigt sind.

8. Rotorlagereinheit nach einem der Ansprüche 1 bis 6, **dadurch gekennzeichnet, dass** die innere (2) und die äußere Verbindungskonstruktion (3) jeweils mit zwei Befestigungsflanschen (10, 11; 12, 13) ausgebildet sind, an denen die inneren (6, 7) und die äußeren Lagerringe (8, 9) der beiden Kegelrollenlager (4, 5) verschraubt sind.

9. Rotorlagereinheit nach einem der Ansprüche 1 bis 8, **dadurch gekennzeichnet, dass** der mit der inneren (2) oder äußeren Verbindungskonstruktion (3) verschraubte Lagerring (6, 7; 8, 9) einen zweiten Lochkreis (17) für eine Befestigung der Rotorlagereinheit (1) in einer Windenergieanlage (100) aufweist.

10. Windenergieanlage mit einem Turm (110), einer an dem Turm befestigten Gondel (120) und einem an der Gondel (120) befestigten Rotor (130), **dadurch gekennzeichnet, dass** der Rotor (130) an der Gondel (120) über eine Rotorlagereinheit (1) nach einem der Ansprüche 1 bis 9 drehbar gelagert ist.

11. Windenergieanlage nach Anspruch 10, **dadurch gekennzeichnet, dass** die Gondel (120) und der Rotor (130) eine Anschlusskonstruktion (160, 170) für die Montage der Rotorlagereinheit (1) aufweisen und die Rotorlagereinheit (1) an der Gondel (120) und/oder dem Rotor (130) mittels der Verschraubung des Befestigungsflansches (10, 11, 12, 13) mit dem zugeordneten Lagerring (6, 7, 8, 9) befestigt ist, wobei sich Schrauben (18) der Verschraubung durch den Befestigungsflansch (10, 11, 12, 13), den Lagerring (6, 7, 8, 9) und Befestigungsbohrungen (19) in der jeweiligen Anschlusskonstruktion (160, 170) erstrecken.

12. Windenergieanlage nach Anspruch 10 mit einer Rotorlagereinheit (1) nach Anspruch 9, **dadurch gekennzeichnet, dass** die Gondel (120) und der Rotor (130) eine Anschlusskonstruktion (150, 160) für die Montage der Rotorlagereinheit (1) aufweisen und die Rotorlagereinheit (1) an der Gondel (120) und/oder dem Rotor (130) mittels einer zweiten Verschraubung (20) der jeweiligen Anschlusskonstruktion (160, 170) an dem zweiten Lochkreis (17) des mit der Verbindungskonstruktion (2, 3) verschraubten Lagerrings (6, 7, 8, 9) befestigt ist.

13. Verfahren zur Einstellung einer axialen Vorspannung in einer Rotorlagereinheit (1) nach einem der Ansprüche 1 bis 9, **dadurch gekennzeichnet, dass** die axiale Vorspannung der Rotorlagereinheit (1) bestimmt und bei Abweichung von einem Sollbereich durch Montage mindestens eines Anpassringes (15) in der Verschraubung (21) zwischen Befestigungsflansch (10, 11, 12, 13) und Lagerring (6, 7, 8, 9) oder durch Nachbearbeitung der Befestigungsfläche (14) in den Sollbereich eingestellt wird.

14. Verfahren nach Anspruch 13, **dadurch gekennzeichnet, dass** die Vorspannung in einem teilmontierten Zustand der Rotorlagereinheit (1) vor Montage des zuletzt zu montierenden, verschraubten Lagerrings (6, 7, 8, 9) durch Vermessung eines axialen Abstandes (D) von zwei Referenzflächen (F1, F2) bestimmt wird, die an dem Befestigungsflansch (10, 11, 12, 13) und dem bereits montierten, anderen Lagerring (7, 6, 9, 8) des Kegelrollenlagers (4, 5), welches durch die Montage des verschraubten Lagerrings (6, 7, 8, 9) gebildet wird, angeordnet sind.

15. Verfahren nach Anspruch 13 oder 14, **dadurch gekennzeichnet, dass** die axiale Vorspannung im zusammengebauten Zustand der Rotorlagereinheit (1) von einer als Wälzkörper (22) in eines der Kegelrollenlager (4, 5) eingebrachten Messrolle (23) in Abhängigkeit vom Umfangswinkel des Kegelrollenlagers (4, 5) aufgenommen wird.

16. Verfahren nach einem der Ansprüche 13 bis 15, **dadurch gekennzeichnet, dass** die axiale Vorspannung im zusammengebauten Zustand der Rotorlagereinheit (1) mittels Dehnungsmessstreifen (24) und/oder Messunterlegscheiben (25) an der Verschraubung durch eine Differenzmessung im Zeitverlauf bestimmt wird.

## Claims

1. Rotor bearing unit for a wind turbine (100) comprising
a sleeve-like inner connecting structure (2) extending along a central axis (A),
a sleeve-like outer connecting structure (3) arranged coaxially to the inner connecting structure (2) and
two tapered roller bearings (4, 5) arranged axially spaced from one another, each with at least one inner bearing ring (6, 7, 7') fastened to the inner connecting structure (2) and at least one outer bearing ring (8, 8', 9, 9') fastened to the outer connecting structure (3),
wherein at least one radially extending mounting flange (10, 11, 12, 13) with an axial mounting surface (14) is formed on the inner (2) and/or the outer connecting structure (3),
**characterized in**
the mounting flange (10, 11, 12, 13) is assigned one of the bearing rings (6, 7, 8, 9), which has a first bolt circle (16) through which the bearing ring (6, 7, 8, 9) assigned to the mounting flange (10, 11, 12, 13) is screwed to the axial mounting surface (14) of the mounting flange (10, 11, 12, 13) while introducing an axial preload into the rotor bearing unit (1).

2. Rotor bearing unit according to claim 1, **characterized in that** the screw connection is designed to fully transmit the forces and torques acting on the screwed bearing ring (6, 7, 8, 9) during operation of the wind turbine (100) via the tapered roller bearing (4, 5) of the screwed bearing ring (6, 7, 8, 9).

3. Rotor bearing unit according to claim 1 or 2, **characterized in that** the mounting flange (10, 11; 12, 13) is arranged at an axial end of the associated connecting structure (2; 3) and the connecting structure (2; 3) terminates with the axial mounting surface (14) in the axial direction.

4. Rotor bearing unit according to one of claims 1 to 3, **characterized in that** the mounting flange (10, 11, 12, 13) is arranged on the connecting structure (2; 3) on the side radially facing away from the respective other connecting structure (3; 2).

5. Rotor bearing unit according to one of claims 1 to 4, **characterized in that** an adjustment ring (15) is inserted in the screw connection between the mounting flange (10, 11, 12, 13) and the bearing ring (6; 7; 8; 9) for adjusting the axial preload of the rotor bearing unit (1).

6. Rotor bearing unit according to one of claims 1 to 5, **characterized in that** the tapered roller bearings (4, 5) are arranged in an O arrangement, the inner connecting structure (2) is formed with at least one mounting flange (10, 11) which is screwed to the inner bearing ring (6; 7) of one of the two tapered roller bearings (4; 5), and the remaining bearing rings (7; 6, 8, 9) are fastened to the respectively assigned connecting structure (2, 3) by means of an interference fit.

7. Rotor bearing unit according to one of claims 1 to 6, **characterized in that** the tapered roller bearings (4, 5) are arranged in an O arrangement, the inner connecting structure (2) is formed with two mounting flanges (10, 11) which are screwed to the inner bearing rings (6, 7) of the two tapered roller bearings (4, 5), and the outer bearing rings (8, 9) are fastened by means of an interference fit in the outer connecting structure (3).

8. Rotor bearing unit according to one of claims 1 to 6, **characterized in that** the inner (2) and the outer connecting structure (3) are each formed with two mounting flanges (10, 11; 12, 13), to which the inner (6, 7) and the outer bearing rings (8, 9) of the two tapered roller bearings (4, 5) are screwed.

9. Rotor bearing unit according to one of claims 1 to 8, **characterized in that** the bearing ring (6, 7; 8, 9) screwed to the inner (2) or outer connecting structure (3) has a second bolt circle (17) for fastening the rotor bearing unit (1) in a wind turbine (100).

10. Wind energy installation having a tower (110), a nacelle (120) fastened to the tower and a rotor (130) fastened to the nacelle (120), **characterized in that** the rotor (130) is rotatably mounted on the nacelle (120) via a rotor bearing unit (1) according to one of claims 1 to 9.

11. Wind energy installation according to claim 10, **characterized in that** the nacelle (120) and the rotor (130) have a connecting structure (160, 170) for mounting the rotor bearing unit (1) and the rotor bearing unit (1) is fastened to the nacelle (120) and/or the rotor (130) by means of the screw connection of the mounting flange (10, 11, 12, 13) with the associated bearing ring (6, 7, 8, 9), wherein screws (18) of the screw connection extend through the mounting flange (10, 11, 12, 13), the bearing ring (6, 7, 8, 9) and fastening holes (19) in the respective adjacent construction (160, 170).

12. Wind energy installation according to claim 10 with a rotor bearing unit (1) according to claim 9, **characterized in that** the nacelle (120) and the rotor (130) have a connecting structure (150, 160) for mounting the rotor bearing unit (1) and the rotor bearing unit (1) is fastened to the nacelle (120) and/or the rotor (130) by means of a second screw connection (20) of the respective connecting structure (160, 170) to the second bolt circle (17) of the bearing ring (6, 7, 8, 9) screwed to the connecting structure (2, 3).

13. Method for setting an axial preload in a rotor bearing unit (1) according to one of claims 1 to 9, **characterized in that** the axial preload of the rotor bearing unit (1) is determined and, in the event of deviation from a target range, is set to the target range by mounting at least one adjusting ring (15) in the screw connection (21) between the mounting flange (10, 11, 12, 13) and the bearing ring (6, 7, 8, 9) or by reworking the mounting surface (14).

14. Method according to claim 13, **characterized in that** the preload in a partially mounted state of the rotor bearing unit (1) is determined before mounting the screwed bearing ring (6, 7, 8, 9) to be mounted last by measuring an axial distance (D) between two reference surfaces (F1, F2), which are arranged on the mounting flange (10, 11, 12, 13) and the already mounted other bearing ring (7, 6, 9, 8) of the tapered roller bearing (4, 5), which is formed by the mounting of the screwed bearing ring (6, 7, 8, 9).

15. Method according to claim 13 or 14, **characterized in that** the axial preload in the assembled state of the rotor bearing unit (1) is taken up by a measuring roller (23) inserted as a rolling element (22) in one of the tapered roller bearings (4, 5) as a function of the circumferential angle of the tapered roller bearing (4, 5).

16. Method according to one of claims 13 to 15, **characterized in that** the axial preload in the assembled state of the rotor bearing unit (1) is determined by means of strain gauges (24) and/or measuring washers (25) on the screw connection by means of a differential measurement over time.

## Revendications

1. Unité de palier de rotor pour une éolienne (100) comprenant
une structure de liaison intérieure en forme de manchon (2) qui s'étend le long d'un axe central (A),
une structure de liaison extérieure (3) en forme de manchon, disposée coaxialement à la structure de liaison intérieure (2), et
deux roulements à rouleaux coniques (4, 5) disposés à distance axiale l'un de l'autre, avec chacun au moins une bague de roulement intérieure (6, 7, 7') fixée à la structure de liaison intérieure (2) et chacun au moins une bague de roulement extérieure (8, 8', 9, 9') fixée à la structure de liaison extérieure (3),
dans lequel au moins une bride de fixation (10, 11, 12, 13) s'étendant radialement avec une surface de fixation axiale (14) est formée sur la construction de liaison intérieure (2) et/ou extérieure (3),
**caractérisé en**
à la bride de fixation (10, 11, 12, 13) est associée l'une des bagues de palier (6, 7, 8, 9) qui présente un premier cercle de trous (16) par lequel la bague de palier (6, 7, 8, 9) associée à la bride de fixation (10, 11, 12, 13) est vissée sur la surface de fixation axiale (14) de la bride de fixation (10, 11, 12, 13) en introduisant une précontrainte axiale dans l'unité de palier de rotor (1).

2. Unité de palier de rotor selon la revendication 1, **caractérisée en ce que** le vissage est conçu pour transmettre entièrement les forces et les couples agissant sur la bague de palier vissée (6, 7, 8, 9) par l'intermédiaire du roulement à rouleaux coniques (4, 5) de la bague de palier vissée (6, 7, 8, 9) pendant le fonctionnement de l'éolienne (100).

3. Unité de palier de rotor selon la revendication 1 ou 2, **caractérisée en ce que** la bride de fixation (10, 11 ; 12, 13) est disposée à une extrémité axiale de la structure de liaison associée (2 ; 3) et la structure de liaison (2 ; 3) se termine par la surface de fixation axiale (14) dans la direction axiale.

4. Unité de palier de rotor selon l'une des revendications 1 à 3, **caractérisée en ce que** la bride de fixation (10, 11, 12, 13) est disposée sur la structure de liaison (2 ; 3) sur le côté radialement opposé à l'autre structure de liaison respective (3 ; 2).

5. Unité de palier de rotor selon l'une des revendications 1 à 4, **caractérisée en ce qu'**une bague d'adaptation (15) est insérée dans le vissage entre la bride de fixation (10, 11, 12, 13) et la bague de palier (6 ; 7 ; 8 ; 9) pour régler la précharge axiale de l'unité de palier de rotor (1).

6. Unité de palier de rotor selon l'une des revendications 1 à 5, **caractérisée en ce que** les roulements à rouleaux coniques (4, 5) sont disposés en O, la structure de liaison intérieure (2) est formée avec au moins une bride de fixation (10, 11) qui est vissée avec la bague de roulement interne (6 ; 7) de l'un des deux roulements à rouleaux coniques (4 ; 5), et les autres bagues de roulement (7 ; 6, 8, 9) sont fixées par ajustement serré sur la structure de liaison (2, 3) respectivement associée.

7. Unité de palier de rotor selon l'une des revendications 1 à 6, **caractérisée en ce que** les roulements à rouleaux coniques (4, 5) sont disposés en O, la structure de liaison intérieure (2) est formée avec deux brides de fixation (10, 11) qui sont vissées avec les bagues de roulement internes (6, 7) des deux roulements à rouleaux coniques (4, 5), et les bagues de roulement externes (8, 9) sont fixées dans la structure de liaison extérieure (3) au moyen d'un ajustement serré.

8. Unité de palier de rotor selon l'une des revendications 1 à 6, **caractérisée en ce que** les structures de liaison interne (2) et externe (3) sont formées chacune de deux brides de fixation (10, 11 ; 12, 13) sur lesquelles sont vissées les bagues de roulement interne (6, 7) et externe (8, 9) des deux roulements à rouleaux coniques (4, 5).

9. Unité de palier de rotor selon l'une des revendications 1 à 8, **caractérisée en ce que** la bague de palier (6, 7 ; 8, 9) vissée à la structure de liaison intérieure (2) ou extérieure (3) présente un deuxième cercle de trous (17) pour une fixation de l'unité de palier de rotor (1) dans une installation d'énergie éolienne (100).

10. Eolienne comprenant une tour (110), une nacelle (120) fixée à la tour et un rotor (130) fixé à la nacelle (120), **caractérisée en ce que** le rotor (130) est monté à rotation sur la nacelle (120) par l'intermédiaire d'une unité de palier de rotor (1) selon l'une des revendications 1 à 9.

11. Eolienne selon la revendication 10, **caractérisée en ce que** la nacelle (120) et le rotor (130) présentent une structure de raccordement (160, 170) pour le montage de l'unité de palier de rotor (1) et l'unité de palier de rotor (1) est fixée à la nacelle (120) et/ou au rotor (130) au moyen du vissage de la bride de fixation (10, 11, 12, 13) avec la bague de roulement associée (6, 7, 8, 9), des vis (18) du vissage s'étendant à travers la bride de fixation (10, 11, 12, 13), la bague de roulement (6, 7, 8, 9) et des trous de fixation (19) dans la structure de raccordement respective (160, 170).

12. Eolienne selon la revendication 10 avec une unité de palier de rotor (1) selon la revendication 9, **caractérisée en ce que** la nacelle (120) et le rotor (130) ont une construction de raccordement (150, 160) pour le montage de l'unité de palier de rotor (1) et l'unité de palier de rotor (1) est fixée à la nacelle (120) et/ou au rotor (130) au moyen d'un deuxième vissage (20) de la construction de raccordement respective (160, 170) sur le deuxième cercle de trous (17) de la bague de palier (6, 7, 8, 9) vissée avec la construction de raccordement (2, 3).

13. Procédé de réglage d'une précontrainte axiale dans une unité de palier de rotor (1) selon l'une des revendications 1 à 9, **caractérisé en ce que** la précontrainte axiale de l'unité de palier de rotor (1) est déterminée et, en cas d'écart par rapport à une plage de consigne, est réglée la plage de consigne par le montage d'au moins une bague d'adaptation (15) dans le vissage (21) entre la bride de fixation (10, 11, 12, 13) et la bague de palier (6, 7, 8, 9) ou par un usinage ultérieur de la surface de fixation (14).

14. Procédé selon la revendication 13, **caractérisé en ce que** la précharge dans un état partiellement monté de l'unité de palier de rotor (1) avant le montage de la dernière bague de palier vissée à monter (6, 7, 8, 9) est déterminée par la mesure d'une distance axiale (D) de deux surfaces de référence (F1, F2) qui sont disposées sur la bride de fixation (10, 11, 12, 13) et sur l'autre bague de roulement (7, 6, 9, 8) déjà montée du roulement à rouleaux coniques (4, 5) qui est formé par le montage de la bague de roulement vissée (6, 7, 8, 9).

15. Procédé selon la revendication 13 ou 14, **caractérisé en ce que** la précontrainte axiale à l'état assemblé de l'unité de palier de rotor (1) est absorbée par un rouleau de mesure (23) monté en tant qu'élément roulant (22) dans l'un des roulements à rouleaux coniques (4, 5) en fonction de l'angle circonférentiel du roulement à rouleaux coniques (4, 5).

16. Procédé selon l'une des revendications 13 à 15, **caractérisé en ce que** la précontrainte axiale à l'état assemblé de l'unité de palier de rotor (1) est déterminée au moyen de jauges de contrainte (24) et/ou de cales de mesure (25) sur le vissage par une mesure différentielle au cours du temps.
